## Europäisches Patentamt

## European Patent Office

## Office européen des brevets

(19)

(11) Veröffentlichungsnummer : **0 386 154 B1**

(12)

# EUROPÄISCHE PATENTSCHRIFT

(51) Int. Cl.$^5$ : **G01N 21/89,** G02B 26/10

(45) Veröffentlichungstag der Patentschrift :
**17.06.92 Patentblatt 92/25**

(21) Anmeldenummer : **89901072.2**

(22) Anmeldetag : **24.12.88**

(86) Internationale Anmeldenummer :
**PCT/EP88/01201**

(87) Internationale Veröffentlichungsnummer :
**WO 89/06787 27.07.89 Gazette 89/16**

---

(54) **VORRICHTUNG ZUM PRÜFEN VON SICH MIT HOHER GESCHWINDIGKEIT BEWEGENDEN BAHNFÖRMIGEN FLÄCHENGEBILDEN.**

---

(30) Priorität : **12.01.88 DE 3800543**

(43) Veröffentlichungstag der Anmeldung :
**12.09.90 Patentblatt 90/37**

(45) Bekanntmachung des Hinweises auf die
Patenterteilung :
**17.06.92 Patentblatt 92/25**

(84) Benannte Vertragsstaaten :
**AT BE CH DE FR GB IT LI LU NL SE**

(56) Entgegenhaltungen :
**EP-A- 0 159 700**
**DE-A- 3 248 782**
**GB-A- 2 169 097**
**US-A- 4 013 367**

(73) Patentinhaber : **LASOR Laser Sorter GmbH**
**Rudolf-Diesel-Strasse 24**
**W-4811 Oerlinghausen (DE)**

(72) Erfinder : **DIPPEL, Dieter**
**Liethstück 12**
**W-4800 Bielefeld 1 (DE)**
Erfinder : **GAUSA, Alexander**
**Max Plankstr. 38**
**W-4800 Bielefeld 12 (DE)**

---

## Beschreibung

Die Erfindung betrifft ein Verfahren und eine Vorrichtung zum Prüfen von sich bewegenden bahnförmigen Flächengebilden auf Fehler, bei dem von einer Lichtquelle, insbesondere einem Laserstrahler, ein Lichtstrahl auf ein rotierendes Spiegelrad geleitet, von diesem über mindestens zwei ortsfeste, über der zu prüfenden Bahn als Faltungsspiegel für den Strahlengang angeordnete Spiegel, deren Scheitellinie sich parallel zur Bahnlaufrichtung der zu prüfenden Bahn erstreckt, auf die zu prüfende Bahn geworfen und das reflektierte und/oder durchgelassene Licht von fotoelektrischen Wandlern aufgenommen und einer Auswertestation zugeführt wird.

Aggregate mit einem Faltungsspiegel sind in großem Umfange verbreitet und beispielsweise aus den DE-OS 33 38 802, 83 100 964, 32 48 782, 83 101 095, 32 08 042, 31 29 808 und 24 11 407 bekannt. Allen diesen Aggregaten ist gemeinsam, daß die Prüfgeschwindigkeit abhängig von der Motordrehzahl und der Spiegelzahl der Spiegelräder ist, mit denen auf der zu prüfenden Fläche der Abtastlichtfleck erzeugt wird. Derzeit handelsübliche Spiegelräder und Motoren laufen mit 15.000 bis 30.000 U/min., wobei es im oberen Drehzahlbereich leicht zur Zerstörung des Spiegelrades kommen kann. Bei den Spiegelrädern handelt es sich im allgemeinen um Glaskörper, deren Facetten verspiegelt werden, wobei die Spiegelräder meist 10 Facetten aufweisen, aber auch bereits Räder mit 20 Facetten gefertigt wurden.

Diese Spiegelräder werden von einer punktförmigen Lichtquelle beaufschlagt. Im allgemeinen handelt es sich dabei um einen Laserstrahl, wobei durch die Drehung des Spiegelrades und damit der Facette dieser Strahl abgelenkt und über die Breite der zu prüfenden Materialbahn geleitet wird. Ist diese Materialbahn sehr breit, so müßte das Spiegelrad relativ hoch über der zu prüfenden Bahn angeordnet sein, was eine erhebliche Bauhöhe bedingt. Es ist deshalb bereits vorgeschlagen worden, das Spiegelrad relativ nahe an der zu prüfenden Bahn anzuordnen und den Abtaststrahl vom Spiegelrad zunächst auf einen stationär über der zu prüfenden Materialbahn angeordneten Spiegel zu werfen, wodurch der reflektierte Strahl erst auf die zu prüfende Bahn gelangt. Bei gleicher Strahllänge und gleicher möglicher Abtastbreite ergibt sich dadurch eine Verkürzung der Bauhöhe des Prüfaggregates, da der Spiegel als optischer Faltungsspiegel dient, d. h., daß bei gleicher Strahllänge und Anordnung eines Faltungsspiegels die Bauhöhe auf bis die Hälfte reduziert werden kann, durch Anordnung mehrerer Spiegel kann die Bauhöhe noch weiter verringert werden.

Unter Zugrundelegung der handelsüblichen Motordrehzahl von 15.000 U/min. und 10 Facetten auf dem Spiegelrad erfolgen in der Minute 150.000 Abtastungen. Diese Scanfrequenz stößt an die mechanischen Grenzen, einmal hinsichtlich der Laufruhe der Motoren und zum anderen hinsichtlich der Festigkeit der Spiegelräder. Sie begrenzt damit aber zugleich die Geschwindigkeit der zu prüfenden Materialbahn, da zum lückenlosen Prüfen eine geringfügige Überlappung des fliegenden Lichtpunktes, der durch den Strahl auf die zu prüfende Bahn geworfen wird, erforderlich ist. Dieser Lichtpunkt darf auch nicht beliebig groß gewählt werden, weil Fehler, auf die der fliegende Lichtpunkt trifft, die Intensität des transmittierten oder reflektierten Lichtes prozentual entsprechend der durch den Fehler verdunkelten Fläche beeinflussen, kleine Fehler also einen zu geringen Kontrast ergeben und damit bei großem Lichtpunkt keine klare Auswertung mehr möglich ist.

Aus der GB-A-2 169 097 ist eine Vorrichtung zum Vergleichen von zwei in einer Ebene liegenden Objektene bekannt. Dazu wird ein Laserstrahl vor Erreichen eines rotierenden Spiegelrades in zwei Lichtstrahlen aufgeteilt, ein Lichtstrahl dabei unter einem Winkel abgelenkt, so daß die beiden Lichtstrahlen mit divergierendem Winkel von den Facetten des Spiegelrades reflektiert werden. Die reflektierten Strahlen gelangen auf einen Satz gekreuzter Spiegel, werden von diesen jeweils umgeleitet auf je einen weiteren Spiegel, der im Winkel von 90 Grad zum jeweiligen ersten Spiegel angeordnet ist und davon über einen Teilbereich der Bahnbreite geführt. Die in Reflexion oder Transmission über einen fotoelektrischen Wandler erhaltenen Impulse werden miteinander verglichen, wobei bei Übereinstimmung der Impulse ein fehlerfreies Produkt und bei Abweichungen ein fehlerhaftes Produkt vorliegt. Eine Erhöhung der Abtastgeschwindigkeit ergibt sich daraus nicht.

Der Erfindung liegt damit die Aufgabe zugrunde, die Scanfrequenz zu erhöhen, ohne die bisher als sicher geltenden Motordrehzahlen und/oder die zugehörige Facettenzahl auf dem Spiegelrad und damit den Spiegelraddurchmesser zu vergrößern.

Bei einem Verfahren gemäß Oberbegriff des Anspruchs 1 wird diese Aufgabe durch die Kombination folgender Verfahrensschritte gelöst:

der von einer Polygonfläche des Spiegelrades ausgehende Lichtstrahl überstreicht während der Drehbewegung des Spiegelrades alle Spiegelflächen des Faltungsspiegels nacheinander,

diese bilden jeweils zueinander einen stumpfen Winkel $\alpha$,

der Faltungsspiegel ist mittig über der zu prüfenden Bahn angeordnet,

von jeder Spiegelfläche des Faltungsspiegels wird der Strahl über die volle Breite der zu prüfenden Bahn geführt,

ein Strahlteiler zwischen dem Spiegelrad und dem Faltungsspiegel leitet aus dem Lichtstrahl einen Hilfsstrahl ab.

Bei einer Vorrichtung gemäß Oberbegriff des Anspruchs 3 wird die Aufgabe durch die Kombination folgender Merkmale gelöst:

der Faltungsspiegel ist mittig über der zu prüfenden Bahn angeordnet,

er besteht aus mehreren Spiegelflächen, die jeweils zueinander einen stumpfen Winkel α bilden,

zwischen dem Spiegelrad und dem Faltungsspiegel ist ein Strahlteiler angeordnet.

Durch die Unterteilung des Faltungsspiegels in mindestens 2 Spiegelflächen wird der Lichtstrahl von einer Facette bei deren Bewegung über beide Spiegel geleitet, wobei durch die Winkelanordnung der Spiegel zueinander der Abtaststrahl entsprechend den 2 Spiegelflächen zweimal über die zu prüfende Bahn geleitet wird. Die Scanfrequenz wird dadurch verdoppelt. Durch Einsatz weiterer Spiegelflächen gemäß einer bevorzugten Ausgestaltung der Erfindung, zwei bis zwanzig Spiegelflächen, kann die Scanfrequenz weiter erhöht werden und zwar bis auf das 20-fache, d. h., daß mit einem handelsüblichen Motor und zugehörigem Spiegelrad von 10 Facetten jetzt statt 150.000 Abtastungen pro Minute 3.000.000 Abtastungen möglich sind. Bei einer Abtastpunktgröße von 1,2 mm Durchmesser sind damit Bahngeschwindigkeiten von über 3.000 m/min. zu bewältigen.

Wesentliche Bedeutung kommt auch dem Merkmal des Strahlenteilers zu, der dem Spiegelrad zugeordnet ist, also zwischen Spiegelrad und Faltungsspiegel eingeschaltet ist und einen Hilfsstrahl aus dem Lichtstrahl ableitet. Durch das Abteilen eines Hilfsstrahles vom Abtaststrahl ist es möglich, ein Taktlineal zu beaufschlagen. Die aus dem Taktlineal abgeleiteten Impulse werden einem Rechner zugefürt und ermöglichen, daß die Übergänge von Spiegelfläche zu Spiegelfläche ausgeblendet werden. Damit ist sichergestellt, daß in diesem Bereich keine Fehlermeldung auftritt, die auf den Übergang des Abtaststrahles von einem Spiegel zum anderen zurückzuführen ist, weil in diesem Bereich der Abtaststrahl nicht oder mehrfach auf die Bahn reflektiert wird.

Die Größe der einzelnen Spiegelfläche liegt gemäß einer vorteilhaften Ausgestaltung der Erfindung zwischen 20 und 100 mm, wobei durch diese Größe und durch die Breite der Materialbahn automatisch der Abstand des Faltungsspiegels vom Spiegelrad bestimmt wird, d. h., daß ein kleinerer Spiegel, der in geringerem Abstand vom Spiegelrad angeordnet ist, eine größere Bauhöhe des Gerätes bedingt, sofern nicht zusätzliche, hintereinandergeschaltete Faltungsspiegel zur Aufteilung des optischen Lichtweges eingesetzt werden.

Eine weitere vorteilhafte Ausgestaltung der Erfindung sieht vor, daß der Winkel zwischen den einzelen Spiegelflächen 130 bis 176 Grad beträgt. Der untere Winkelbereich wird dann gewählt, wenn nur wenig, also beispielsweise zwei Spiegelflächen angeordnet werden, der obere Bereich, also der Bereich mit dem stumpferen Winkel wird beim Anordnen von einer größeren Anzahl von Spiegelflächen verwandt.

Die Erfindung wird nachstehend anhand der Zeichnungen näher erläutert.

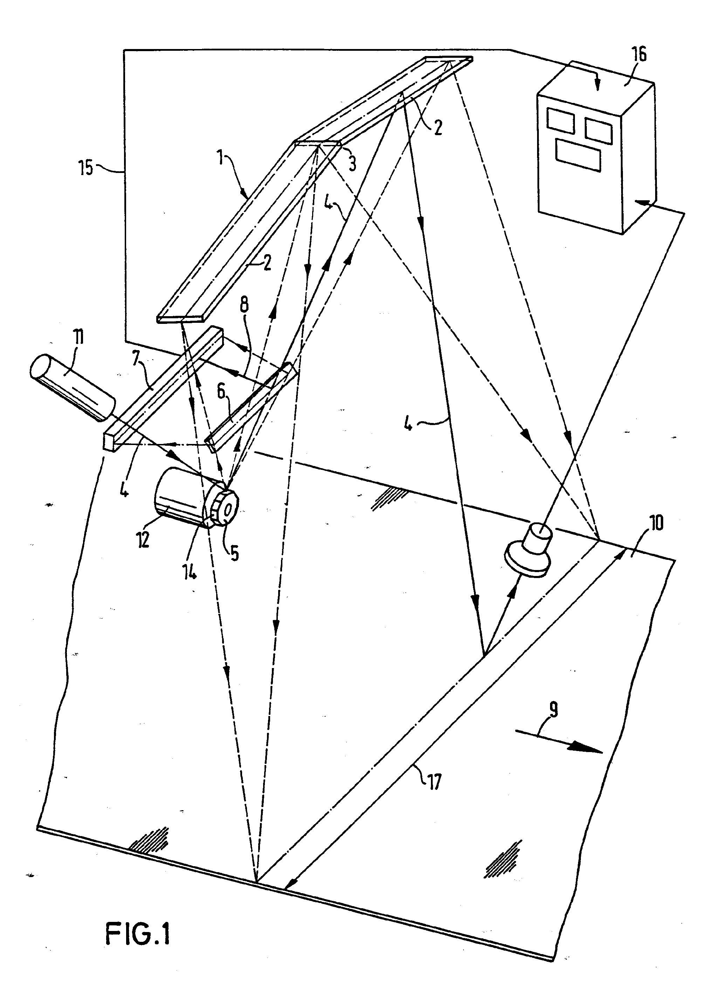

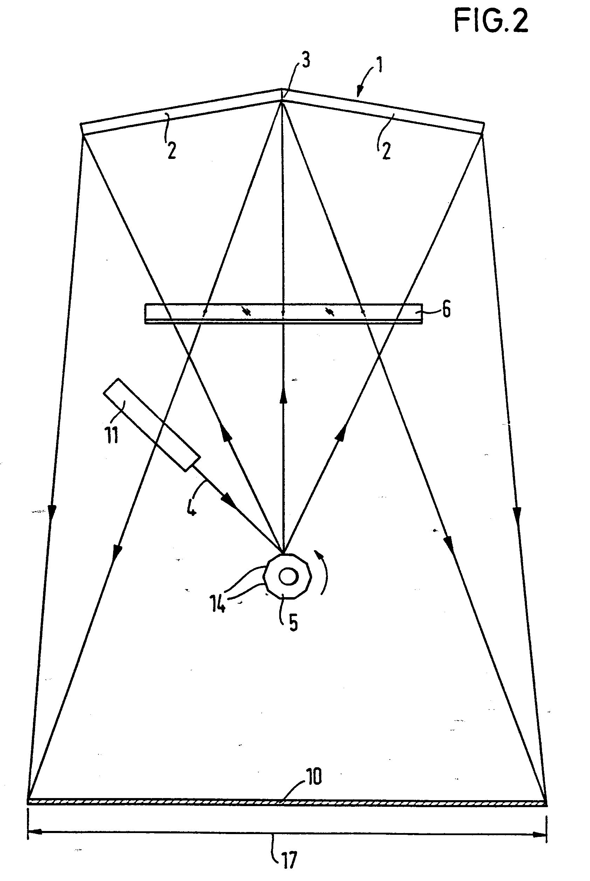

Fig. 1 zeigt schematisch die Anordnung der einzelnen Aggregate,

Fig. 2

und 3 den Strahlenverlauf bei einem Faltungsspiegel, der mehrere Spiegelflächen besitzt,

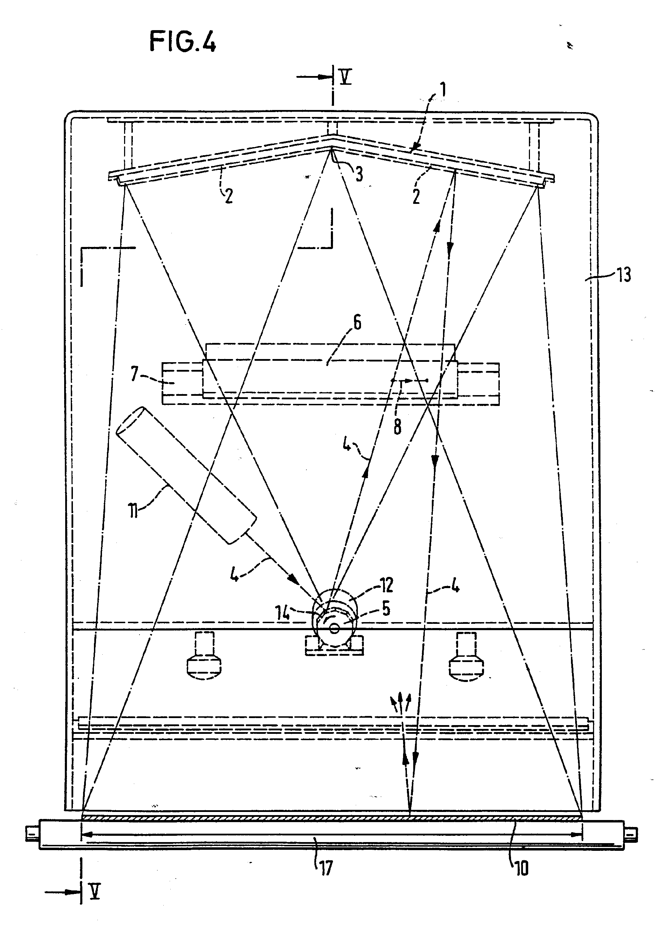

Fig. 4 in der Vorderansicht ein Prüfgerät,

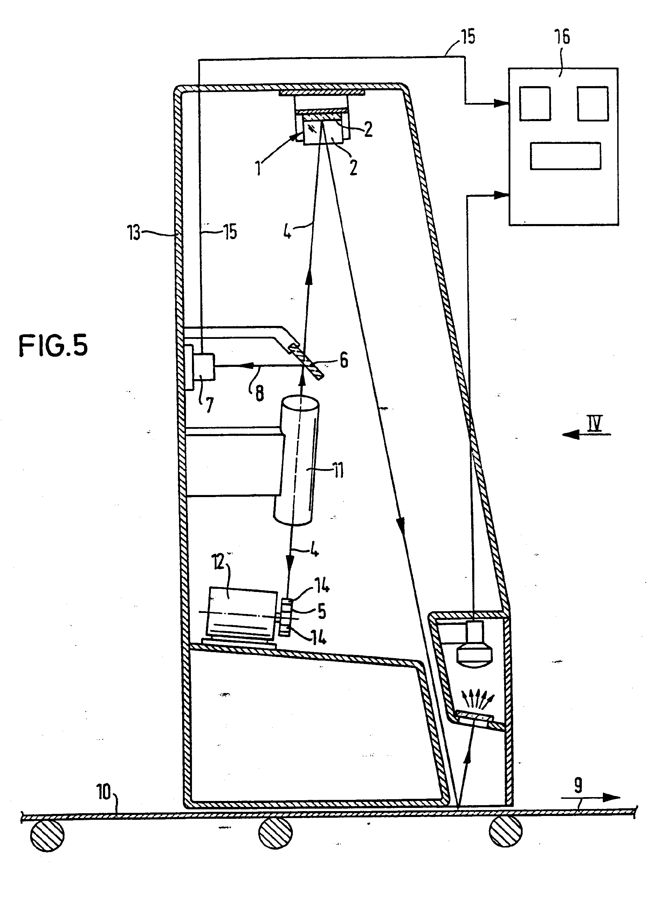

Fig. 5 einen Schnitt gemäß der Linie V-V in Fig. 4.

In einem Gehäuse (13) ist ein Laserstrahler (11) angeordnet, der einen Lichtstrahl (4) auf ein von einem Polygonmotor (12) angetriebenes Spiegelrad (5) wirft. Die einzelnen Polygonflächen (14) des Spiegelrades (5) reflektieren den Lichtstrahl (4) in Vorrichtung des Faltungsspiegels (1). Dabei durchtritt der Lichtstrahl (4) zunächst den Strahlteiler (6), wo ein Hilfsstrahl (8) abgespalten wird. Dieser Hilfsstrahl (8) gelangt auf ein Taktlineal (7), das über eine Taktleitung (15) mit dem Rechner (16) verbunden ist.

Nach Passieren des Strahlteilers (6) gelangt der Lichtstrahl (4) auf den Faltungsspiegel (1) und trifft hier auf eine der Spiegelflächen (2), von wo er auf die zu prüfende, in Richtung des Pfeiles (9) laufende Bahn (10) reflektiert wird und hier beim Abtasten die volle Abtastbreite (17) bestreicht, ehe er auf eine zweite Spiegelfläche (2) fällt, die durch eine Scheitellinie (3) von der ersten Spiegelfläche (2) getrennt ist.

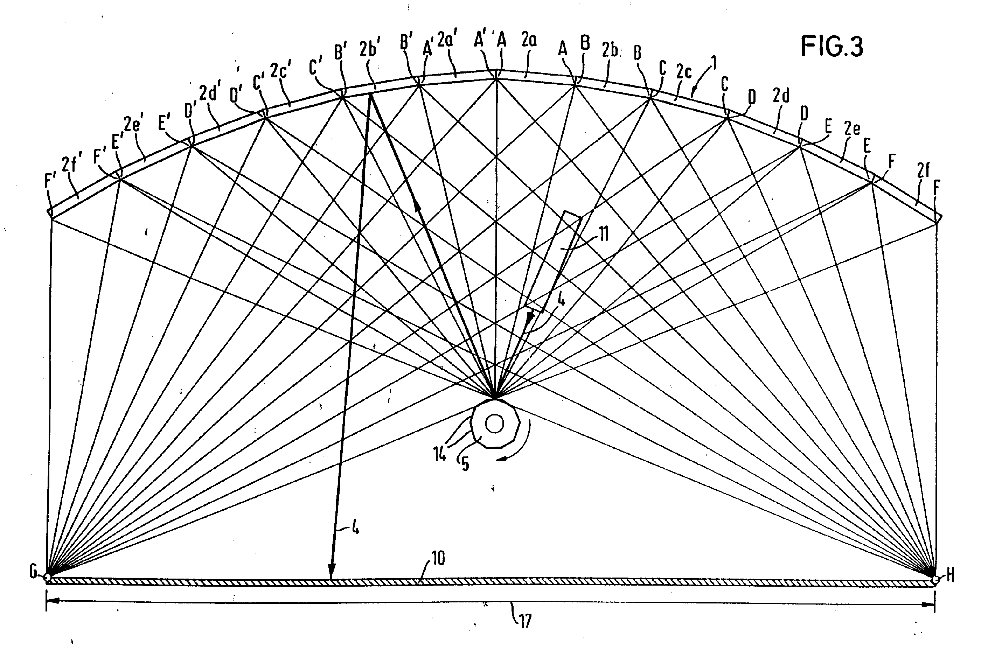

In Figur 3 ist ein Faltungsspiegel (1) dargestellt, der zwölf Spiegelflächen (2) aufweist, die mit 2a bis 2f auf der rechten Seite und auf der linken Seite 2a′ bis 2f′ bezeichnet sind. Die Länge der einzelnen Spiegelflächen (2) beträgt 170 mm, d. h., daß die Gesamtlänge des Faltungsspiegels (1) bei ca. 2 m liegt. Bei dieser Konstruktion wird eine Abtastbreite (17) von ca. 2 m überstrichen. Das Spiegelrad (5) ist dabei in einer Stellung gezeigt, daß der Lichtstrahl (4), vom Laserstrahler (11) ausgesandt und von der Polygonfläche (14) auf die Spiegelfläche (2b′) reflektiert wird. Bei der Drehung des Spiegelrades (5) im Uhrzeigersinn wandert der Lichtstrahl (4) über die Länge des Spiegels (2b) zwischen den Punkten B′ und B′ und wird von hier auf die Materialbahn (10) reflektiert, wo die volle Abtastbreite (17) zwischen den Punkten G und H überstrichen wird. Die vereinfachte Darstellung in Figur 3 gibt die Abstände des Faltungsspiegels (1) zu den punkten G und H bzw. zum Spiegelrad (5) nicht in den richtigen Relationen wider. Es ergeben sich daraus ungleiche Einfalls- bzw. Ausfallswinkel, die in der Praxis selbstverständlich nicht auftreten.

Dreht sich das Spiegelrad (5) weiter, so trifft der Lichtstrahl (4) auf die Spiegelfläche (2a′), die durch die Punkte A′-A′ begrenzt ist. Es wird damit ein Feld abgetastet, das durch die Punkte A′-A′, H und G begrenzt ist, d. h. wiederum die volle Abtastbreite (17). Mit der weiteren Drehung des Spiegelrades (5) werden dann die Spiegelflächen (2a, 2b, 2c, 2d, 2e und 2f) mit dem Lichtstrahl (4) beaufschlagt. Danach trifft der Lichtstrahl (4) vom Laserstrahler (11) auf die nächste Polygonfläche (14) des Spiegelrades (5); diese lenkt den Lichtstrahl (4) auf die Spiegelfläche (2f'), wo der Bereich zwischen den Punkten F'-F' bestrichen wird. In analoger Weise wird somit durch jede Polygonfläche (4) jede Spiegelfläche (2) beaufschlagt, wobei jede Spiegelfläche (2) den Lichtstrahl (4) so reflektiert, daß er über die Abtastbreite (17) zwischen den Punkten G und H hindurchwandert.

## Patentansprüche

1. Verfahren zum Prüfen von sich bewegenden bahnförmigen Flächengebilden auf Fehler, bei dem von einer Lichtquelle, insbesondere einem Laserstrahler, ein Lichtstrahl auf ein rotierendes Spiegelrad geleitet, von diesem über mindestens zwei ortsfeste, über der zu prüfenden Bahn als Faltungsspiegel für den Strahlengang angeordnete Spiegel, deren Scheitellinie sich parallel zur Bahnlaufrichtung der zu prüfenden Bahn erstreckt, auf die zu prüfende Bahn geworfen und das reflektierte und/oder durchgelassene Licht von fotoelektrischen Wandlern aufgenommen und einer Auswertestation zugeführt wird, gekennzeichnet durch die Kombination folgender Merkmale:
der von einer Polygonfläche des Spiegelrades ausgehende Lichtstrahl überstreicht während der Drehbewegung des Spiegelrades alle Spiegelflächen des Faltungsspiegels nacheinander,
diese bilden jeweils zueinander einen stumpfen Winkel α,
der Faltungsspiegel ist mittig über der zu prüfenden Bahn angeordnet,
von jeder Spiegelfläche des Faltungsspiegels wird der Strahl über die volle Breite der zu prüfenden Bahn geführt,
ein Strahlteiler zwischen dem Spiegelrad und dem Faltungsspiesel leitet aus dem Lichtstrahl einen Hilfsstrahl ab.

2. Verfahren nach Anspruch 1, dadurch gekennzeichnet, daß der Hilfsstrahl ein Taktlineal beaufschlagt und die daraus abgeleiteten Impulse die Übergänge zwischen den einzelnen Spiegelflächen ausblenden.

3. Vorrichtung zur Durchführung des Verfahrens nach einem der Ansprüche 1 und 2, die im wesentlichen aus einer Lichtquelle, insbesondere einem Laserstrahler, einem rotierenden Spiegelrad mindestens zwei ortsfest über der zu prüfenden Bahn als Faltungsspiegel angeordneten Spiegel, deren Scheitellinie sich parallel zur Bahnlaufrichtung der zu prüfenden Bahn erstreckt sowie fotoelektrischen Wandlern und einer Auswertestation besteht, gekennzeichnet durch die Kombination folgender Merkmale:
der Faltungsspiegel (1) ist mittig über der zu prüfenden Bahn (10) angeordnet,
er besteht aus mehreren Spiegelflächen (2), die jeweils zueinander einen stumpfen Winkel α bilden,
zwischen dem Spiegelrad (5) und dem Faltungsspiegel (1) ist ein Strahlteiler (6) angeordnet.

4. Vorrichtung nach Anspruch 3, dadurch gekennzeichnet, daß der Faltungsspiegel (1) aus zwei bis zwanzig Spiegelflächen (2) besteht.

5. Vorrichtung nach einem der Ansprüche 3 und 4, dadurch gekennzeichnet, daß die Länge jeder Spiegelfläche (2) 20 bis 1.000 mm beträgt.

6. Vorrichtung nach einem der Ansprüche 3 bis 5, dadurch gekennzeichnet, daß der Winkel α zwischen den einzelnen Spiegelflächen (2) 130 bis 176 Grad beträgt.

7. Vorrichtung nach einem der Ansprüche 3 bis 6, dadurch gekennzeichnet, daß dem Spiegelrad (5) ein Taktlineal (7) zugeordnet ist.

8. Vorrichtung nach einem der Ansprüche 3 bis 7, dadurch gekennzeichnet, daß das Taktlineal (7) durch einen aus dem Lichtstrahl (4) abgeteilten Hilfsstrahl (8) beaufschlagt wird.

9. Vorrichtung nach einem der Ansprüche 3 bis 8, dadurch gekennzeichnet, daß die Übergänge von Spiegelfläche (2) zu Spiegelfläche (2) durch vom Taktlineal (7) gelieferte Impulse ausgeblendet werden.

## Claims

1. A process for inspecting moving webs of material for defects, in which a light beam from a light source, especially a laser emitter, is directed onto a rotating reflecting wheel, from this is projected onto the web to be inspected by way of at least two fixed mirrors positioned in the form of a folding mirror for the ray path above the web to be inspected, the apex line of which mirrors extends parallel to the direction of travel of the web to be inspected, and the reflected and/or transmitted light is received by photoelectric transducers and supplied to an evaluating station, characterized by the combination of the following process steps:
the light beam coming from a face of the polygon of the reflecting wheel passes during rotation of the reflecting wheel over all reflecting faces of the folding mirror in succession,

these reflecting faces form an obtuse angle α with each other,

the folding mirror is arranged centrally above the web to be inspected,

the beam is guided from each reflecting face of the folding mirror across the full width of the web to be inspected,

a beam splitter between the reflecting wheel and the folding mirror deflects an auxiliary beam from the light beam.

2. A process according to claim 1, characterized in that the auxiliary beam falls on a timing scale and the pulses derived therefrom mask out the transitions between the individual reflecting faces.

3. A device for implementing the process according to one of claims 1 and 2, which essentially comprises a light source, in particular a laser emitter, a rotating reflecting wheel, at least two mirrors arranged fixedly in the form of a folding mirror above the web to be inspected, the apex line of which mirrors extends parallel to the direction of travel of the web to be inspected, and also photoelectric transducers and an evaluating station, characterized by the combination of the following features:

the folding mirror (1) is arranged centrally above the web (10) to be inspected,

it consists of several reflecting faces (2), which form an obtuse angle α with each other,

a beam splitter (6) is arranged between the reflecting wheel (5) and the folding mirror (1).

4. A device according to claim 3, characterized in that the folding mirror (1) consists of two to twenty reflecting faces (2).

5. A device according to one of claims 3 and 4, characterized in that the length of each reflecting face (2) is from 20 to 1,000 mm.

6. A device according to one of claims 3 to 5, characterized in that the angle α between the individual reflecting faces (2) is from 130 to 176 degrees.

7. A device according to one of claims 3 to 6, characterized in that a timing scale (7) is associated with the reflecting wheel (5).

8. A device according to one of claims 3 to 7, characterized in that an auxiliary beam (8) split off the light beam (4) acts on the timing scale (7).

9. A device according to one of claims 3 to 8, characterized in that the transitions from reflecting face (2) to reflecting face (2) are masked out by pulses supplied by the timing scale (7).

## Revendications

1. Procédé pour la recherche de défauts dans des produits plats en bande qui se déplacent, dans lequel un rayon lumineux provenant d'une source lumineuse, en particulier d'une source laser, est amené sur une roue à miroirs animée d'un mouvement de rotation, de là, est envoyé sur la bande à contrôler par l'intermédiaire d'au moins deux miroirs fixes qui sont disposés sous forme de miroirs angulaires au-dessus de la bande à contrôler et dont la ligne de jonction est parallèle à la direction de défilement de la bande à contrôler et la lumière réfléchie et/ou transmise est captée par des transducteurs photo-électriques et envoyée à une station d'exploitation, caractérisé par la combinaison des caractéristiques suivantes:

le rayon lumineux provenant d'une surface du polygone de la roue à miroirs balaie successivement toutes les surfaces réfléchissantes du miroir angulaire au cours de la rotation de la roue à miroirs,

les surfaces réfléchissantes du miroir angulaire forment entre elles un angle obtus α,

le miroir angulaire est disposé au-dessus de la bande à contrôler, au milieu de celle-ci,

chaque surface réfléchissante du miroir angulaire renvoie le rayon lumineux sur l'ensemble de la largeur de la bande à contrôler,

un diviseur de rayon disposé entre la roue à miroirs et le miroir angulaire dérive un rayon secondaire du rayon lumineux.

2. Procédé selon la revendication 1, caractérisé en ce que le rayon lumineux secondaire est dirigé sur une règle de synchronisation et les impulsions obtenues suppriment les transitions entre les différentes surfaces réfléchissantes.

3. Dispositif pour la mise en oeuvre du procédé selon l'une des revendications 1 et 2 formé essentiellement d'une source lumineuse, en particulier d'une source laser, d'une roue à miroirs animée d'un mouvement de rotation, d'au moins deux miroirs fixes qui sont disposés sous forme de miroirs angulaires au-dessus de la bande à contrôler et dont la ligne de jonction est parallèle à la direction de défilement de la bande ainsi que de transducteurs photo-électriques et d'une station d'exploitation, caractérisé par la combinaison des caractéristiques suivantes:

le miroir angulaire (1) est disposé au-dessus de la bande à contrôler ( 10), au milieu de celle-ci,

il est formé de plusieurs surfaces réfléchissantes (2) qui forment entre elles chaque fois un angle obtus α,

un diviseur de rayon (6) est disposé entre la roue à miroirs (5) et le miroir angulaire (1).

4. Dispositif selon la revendication 3, caractérisé en ce que le miroir angulaire (1) est formé de deux à vingt surfaces réfléchissantes (2).

5. Dispositif selon l'une des revendications 3 et 4, caractérisé en ce que la longueur de chaque surface réfléchissante (2) est comprise entre 20 et 1.000 mm.

6. Dispositif selon l'une des revendications 3 à 5, caractérisé en ce que l'angle $\alpha$ entre les différentes surfaces réfléchissantes (2) est compris entre 130 et 176 degrés.

7. Dispositif selon l'une des revendications 3 à 6, caractérisé en ce qu'une règle de synchronisation (7) est associée à la roue à miroirs (5).

8. Dispositif selon l'une des revendications 3 à 7, caractérisé en ce que la règle de synchronisation (7) reçoit un rayon lumineux secondaire (8) dérivé du rayon lumineux (4).

9. Dispositif selon l'une des revendications 3 à 8, caractérisé en ce que les transitions de surface réfléchissante (2) à surface réfléchissante (2) sont supprimées par les impulsions délivrées par la règle de synchronisation (7).

FIG.1

FIG.2

FIG.3

EP 0 386 154 B1

FIG.4

EP 0 386 154 B1

FIG.5

11